# EUROPÄISCHE PATENTSCHRIFT

(11) **EP 3 821 306 B1**
(45) Veröffentlichungstag und Bekanntmachung des Hinweises auf die Patenterteilung: **03.05.2023**
(21) Anmeldenummer: 19731227.5
(22) Anmeldetag: 13.06.2019
(51) Int. Cl.: G05B 19/042

(54) **VERFAHREN ZUM PARAMETRIEREN EINES SENSORSYSTEMS**
METHOD FOR PARAMETRISING A SENSOR SYSTEM
PROCÉDÉ DE PARAMÉTRAGE D'UN SYSTÈME DE CAPTEURS

(30) Priorität: 12.07.2018 DE 102018116892
(43) Veröffentlichungstag der Anmeldung: 19.05.2021
(73) Patentinhaber: Endress+Hauser Process Solutions AG, 4153 Reinach (CH)
(72) Erfinder: SCHMIDT, Ralf, 68680 Kembs (FR); KILIAN, Markus, 79249 Merzhausen (DE); BIRGEL, Eric, 79650 Schopfheim (DE); BUCHNER, Reinhard, 87484 Nesselwang (DE)
(74) Vertreter: Trenkle, Dennis
(86) Internationale Anmeldenummer: PCT/EP2019/065450
(87) Internationale Veröffentlichungsnummer: WO 2020/011481

(56) Entgegenhaltungen:
- WO-A1-2016/154326
- WO-A1-2018/100383
- WO-A2-2004/090679
- DE-A1-102010 029 952
- DE-A1-102011 051 212

## Beschreibung

Die Erfindung betrifft ein Verfahren zum Parametrieren eines Sensorsystems, welches Sensorsystem zumindest einen internen Sensor zum Erfassen einer physikalischen Messgröße und zumindest einen weiteren Sensor zum Erfassen von Umgebungsdaten des Sensorsystems aufweist.

Aus dem Stand der Technik sind bereits Feldgeräte bekannt geworden, die in industriellen Anlagen zum Einsatz kommen. In der Automatisierungstechnik ebenso wie in der Fertigungsautomatisierung werden vielfach Feldgeräte eingesetzt. Als Feldgeräte werden im Prinzip alle Geräte bezeichnet, die prozessnah eingesetzt werden und die prozessrelevante Informationen liefern oder verarbeiten. Feldgeräte stellen eine Unterklasse des Begriffs "Sensorsysteme" dar. So werden Feldgeräte zur Erfassung und/oder Beeinflussung von Prozessgrößen verwendet. Zur Erfassung von Prozessgrößen dienen Sensorsysteme. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktorsysteme verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

Im Zuge der fortschreitenden Digitalisierung hinsichtlich der Schlagworte "Internet of Things (loT)" und "Industrie 4.0", welche auch vor Komponenten von Prozessanlagen nicht Halt macht, besteht ein erhöhter Bedarf, Daten von Sensorsystemen, insbesondere Messdaten, Diagnosedaten, Parameterwerte, etc. an zentraler Stelle verfügbar zu machen und aus diesen Daten einen Mehrwert zu schaffen (Schlagworte hierfür sind "Big Data Analysis", "Predictive Maintenance", etc.). Unter der zentralen Stelle wird häufig eine über das Internet kontaktierbare Datenbank, insbesondere eine sogenannte Cloud-fähige Datenbank, verstanden.

Heutzutage werden Sensorsysteme aber hauptsächlich noch über industrielle Feldbusnetzwerke von einer übergeordneten Einheit aus angesteuert und deren Daten an die übergeordnete Einheit übermittelt. Die Intelligenz ist hierbei zentralisiert auf Seiten der übergeordneten Einheit verortet. Aufgrund des derzeitigen Wandels durch die fortschreitende Digitalisierung wird die Intelligenz zunehmend dezentral auf die einzelnen Feldgeräte verlagert. Die einzelnen Sensorsysteme werden sich in Zukunft zunehmend auf eigene Initiative hin Informationen beschaffen können.

Feldgeräte, bzw. Sensorsysteme, die in eine neue Applikation einer Prozessanlage integriert werden, oder Austauschsensorsysteme, die ein veraltetes oder defektes Sensorsystem einer Applikation ersetzen, müssen im Zuge der Inbetriebnahme spezifisch auf die jeweilige Applikation des Sensorsystems in der Messstelle angepasst werden. Dafür werden diese Sensorsysteme während oder nach der Fertigung konfiguriert und parametriert. Die Konfiguration beschreibt zum einen die hardwareseitige Konfiguration, beispielsweise betreffend das Flanschmaterial eines Durchflussmessgerätes, als auch die softwareseitige Konfiguration. Unter Parametrierung versteht man das Definieren und Festlegen von Parametern, mit deren Hilfe der Betrieb des Sensorsystems auf die jeweiligen Merkmale der Applikation, beispielsweise das Messmedium, eingestellt wird.

Abhängig vom Typs des Sensorsystems kann ein Sensorsystem mehrere hunderte verschiedene Parameter aufweisen, denen im Zuge der Inbetriebnahme Parameterwerte zugewiesen werden. Heutzutage wird die Parametrierung eines Sensorsystems mittels Softwaretools vorgenommen. Die Eingaben der Parameterwerte sind ausschließlich textbasiert möglich und setzen ein technisches Verständnis seitens des Bedieners voraus.

Die DE 10 2010 029952 A1 beschreibt Verfahren zum Integrieren von zumindest einem Feldgerät in ein Netzwerk der Automatisierungstechnik, wobei ein Service Provider dem Betreiber einer Automatisierungsanlage über Cloud-Computing WebServices bzw. Internet basierte Dienste, automatisch oder auf Anfrage das virtuelle Abbild des Feldgeräts mit den konkreten feldgeräte- und applikationsspezifischen Eigenschaften zur Laufzeit übermittelt und bevorzugt unmittelbar in das Feldgerät überträgt.

In der DE 10 2011 051212 A1 werden Verfahren, Vorrichtungen und Herstellungsartikel zum Auswechseln von Feldgeräten in Prozessleitsystemen offenbart. Ein offenbartes, beispielhaftes Verfahren beinhaltet die Aufzeichnung, an einer ersten Prozesssteuereinheit eines Prozessleitsystems, von Konfigurationsdaten, die zwecks Inbetriebnahme des ersten Feldgerätes von einem Konfigurationssubsystem des Prozessleitsystems an ein erstes Feldgerät gesendet werden, das Erkennen, an einer zweiten Prozesssteuereinheit eines Prozessleitsystems, der Auswechslung des ersten Feldgerätes durch ein zweites Feldgerät und das Senden, wenn die Auswechslung erkannt wurde, der aufgezeichneten Konfigurationsdaten von der zweiten Prozesssteuereinheit an das zweite Feldgerät, um das zweite Feldgerät in Betrieb zu nehmen.

Die WO 2004/090679 A2 offenbart eine Sensorvorrichtung mit einer seriellen Datenschnittstelle und einer statischen eindeutigen Identifikationsnummer. Die serielle Datenschnittstelle bietet Zugang zum Abrufen der statischen eindeutigen Identifikationsnummer und von mit einem Sensor der Sensorvorrichtung gemessenen Daten aus dem Speicher.

Die WO2016/154326A1 offenbart das automatische Konfigurieren von Betriebsparametern von Komponenten eines Gebäudesystems.

Die WO2018/100383A1 offenbart die Steigerung der Energieeffizienz von räumlich verteilten Netzwerken von Sensoren.

Ausgehend von dieser Problematik liegt der Erfindung die Aufgabe zugrunde, ein Verfahren vorzustellen, welches eine im Wesentlichen selbstständige Inbetriebnahme von Sensorsystemen erlaubt.

Verfahren zum Parametrieren eines Sensorsystems, welches Sensorsystem zumindest einen internen Sensor zum Erfassen einer physikalischen Messgröße und zumindest einen weiteren Sensor zum Erfassen von Umgebungsdaten des Sensorsystems aufweist, umfassend:
- Anbringen des Sensorsystems an einer Messstelle in einer Anlage der Automatisierungstechnik in vorgesehener Position und Lage;
- Erfassen von Umgebungsdaten des Sensorsystems mittels des zumindest einen weiteren Sensors;
- Übermitteln von Identifikationsidentifikationen, welche insbesondere den Typ des Sensorsystems umfassen, und der erfassten Umgebungsdaten an eine Speicherplattform und Verknüpfen und Ablegen der Identifikationsinformationen und der erfassten Umgebungsdaten in der Speicherplattform, wobei die Speicherplattform eine Vielzahl von Umgebungsdaten weiterer Sensorsysteme, welche in unterschiedlichen Messstellen angebracht sind, und den weiteren Sensorsystemen zugeordneten Parametersätzen vorhält;
- Identifizieren vergleichbarer Sensorsysteme anhand der Identifikationsinformationen und Vergleichen der Umgebungsdaten des Sensorsystems mit den Umgebungsdaten der vergleichbaren Sensorsysteme;
- Erstellen eines Parametersatzes für das Sensorsystem zum Betreiben des internen Sensors auf Basis des Vergleichs der Umgebungsdaten, wobei der erstellte Parametersatz dem Sensorsystem und den Umgebungsdaten des Sensorsystems auf der Speicherplattform zugeordnet wird; und
- Übermitteln des erstellten Parametersatzes an das Sensorsystem und Laden des erstellten Parametersatzes in das Sensorsystem.

Der große Vorteil des erfindungsgemäßen Verfahrens besteht darin, dass die Inbetriebnahme eines Sensorsystems vereinfacht wird. Das Sensorsystem beschafft sich über den weiteren Sensor Daten bezüglich seiner Umgebung. Bei dem zusätzlichen Sensor handelt es sich beispielsweise um einen Lagesensor, einen Neigungssensor, einen GSP-Sensor, einen Lichtsensor, etc. Diese Umgebungsdaten werden an eine Speicherplattform übermittelt und von dieser mit bekannten Umgebungsdaten, welche auf der Speicherplattform abgelegt sind, verglichen. Anhand des Vergleichs wird für das Sensorsystem ein spezifischer Parametersatz erstellt. Dies geschieht auf der Grundlage, dass zu den auf der Speicherplattform gespeicherten Umgebungsdaten selbst Parametersätze auf der Speicherplattform hinterlegt sind.

Es kann vorgesehen sein, dass das Sensorsystem mehrere weitere Sensoren zur Erfassung der Umgebungsdaten aufweist, wodurch mehrere Typen von Umgebungsdaten zur Verfügung stehen und die Genauigkeit und die Güte des Erstellens eines passenden spezifischen Parametersatzes erhöht werden.

Nach dem Erstellen eines spezifischen Parametersatzes wird dieser an das Sensorsystem übermittelt und dieses mit dem spezifischen Parametersatz parametriert. Zusätzlich werden die Umgebungsdaten des Sensorsystems auf der Speicherplattform gespeichert, sowie mit dem erstellten spezifischen Parametersatz verknüpft. Dadurch steigt der Erfahrungsschatz der Speicherplattform, wodurch die Effizienz und die Passgenauigkeit des Erstellens zukünftiger spezifischer Parametersätze für weitere Sensorsysteme erhöht wird.

Beispiele für Sensorsysteme, die im Zusammenhang mit dem erfindungsgemäßen Verfahren genannt werden, sind bereits im einleitenden Teil der Beschreibung beispielhaft beschrieben worden.

Gemäß einer vorteilhaften Ausgestaltung des erfindungsgemäßen Verfahrens ist vorgesehen, dass mittels des internen Sensors Umgebungsdaten erhoben werden, welche zumindest eine der folgenden Kategorien entsprechen:
- Informationen bezüglich der Ortsposition des Sensorsystems;
- Informationen bezüglich der Einbaulage, insbesondere der Einbauhöhe und/oder des Neigungswinkels, des Sensorsystems in der Messstelle;
- Informationen bezüglich der Helligkeit der Messstelle;
- Informationen bezüglich der Umgebungstemperatur des Sensorsystems.

Die Umgebungsdaten werden von entsprechenden geeigneten Sensortypen aufgenommen. Informationen bezüglich der Ortsposition des Sensorsystems werden beispielsweise von GSP-Sensoren, oder aber von GSM-Modulen basierend auf Triangulation, erhoben. Informationen bezüglich der Einbaulage und/oder des Neigungswinkels des Sensorsystems werden beispielsweise mittels Lagesensoren erhoben. Informationen bezüglich der Helligkeit der Messstelle werden beispielsweise mittels eines Lichtsensors erhoben. Informationen bezüglich der Umgebungstemperatur des Sensorsystems werden beispielsweise mittels eines oder mehrerer Temperatursensoren erhoben.

Gemäß einer bevorzugten Ausgestaltung des erfindungsgemäßen Verfahrens ist vorgesehen, dass das Sensorsystem vor dem Erfassen der Umgebungsdaten in das Kommunikationssystem der Messstelle eingebunden wird und wobei eine Kommunikation des Sensorsystems mit weiteren Komponenten der Messstelle über das Kommunikationssystem ermöglicht wird. Das Sensorsystem kann auf diese Weise Telegramme an die weiteren Komponenten der Messstelle übermitteln und Anfragen an diese stellen, bzw. Anfragen der weiteren Komponenten der Messstelle beantworten.

Gemäß einer ersten Variante des erfindungsgemäßen Verfahrens ist vorgesehen, dass das Sensorsystem mit zumindest einem weiteren Sensorsystem der Messstelle kommuniziert, wobei das Sensorsystem von dem weiteren Sensorsystem zusätzliche Umgebungsdaten abruft, und wobei das Sensorsystem die zusätzlichen Umgebungsdaten zusammen mit den selbst erfassten Umgebungsdaten an die Speicherplattform übermittelt. Dadurch wird der Umfang der Umgebungsdaten auf weitere Umgebungsdaten der Messstelle ausgeweitet. Die Genauigkeit des Erstellens eines spezifischen Parametersatzes wird dadurch erhöht, da die Funktion des Sensorsystems in der Messstelle anhand der weiteren Umgebungsdaten bestimmt werden kann.

Gemäß einer zweiten Variante des erfindungsgemäßen Verfahrens ist vorgesehen, dass das Sensorsystem mit zumindest einer Bedieneinheit kommuniziert, welche Bedieneinheit zumindest einen Sensor zur Erfassung von Umgebungsdaten aufweist, wobei das Sensorsystem von der Bedieneinheit zusätzliche Umgebungsdaten abruft, und wobei das Sensorsystem die zusätzlichen Umgebungsdaten zusammen mit den selbst erfassten Umgebungsdaten an die Speicherplattform übermittelt. Die interne Sensorik des Sensorsystems wird somit um die Sensorik einer Bedieneinheit erweitert, wodurch der Umfang der Umgebungsdaten erweitert wird und Genauigkeit des Erstellens eines spezifischen Parametersatzes erhöht wird. Die Bedieneinheit weist beispielsweise bereits genannte Sensortypen, aber auch weitere Sensortypen, wie beispielsweise eine Kamera, auf. Zum Erfassen der zusätzlichen Umgebungsdaten muss sich die Bedieneinheit in der Nähe befinden, bevorzugt unmittelbar in der Nähe des Sensorsystems, damit beispielsweise die Ortsposition des Sensorsystems mit einer ausreichend hohen Zuverlässigkeit bestimmt werden kann.

Gemäß einer bevorzugten Ausgestaltung des erfindungsgemäßen Verfahrens ist vorgesehen, dass als Bedieneinheit ein mobiles Endgerät oder eine Datenbrille verwendet wird. Bei dem mobilen Endgerät handelt es sich beispielsweise um ein Smartphone oder einen Tablet-PC. Ein solches mobiles Endgerät weist in der Regel Sensoren in Form einer Kamera, eines GPS-Sensors, zumindest eines Lagesensors und/oder eines GSM-Moduls auf.

Gemäß einer dritten Variante des erfindungsgemäßen Verfahrens ist vorgesehen, dass das Sensorsystem mit einer weiteren Speicherplattform oder der Leitstelle der Anlage kommuniziert, wobei das Sensorsystem von der Speicherplattform oder der Leitstelle der Anlage zusätzliche Umgebungsdaten abruft, und wobei das Sensorsystem die zusätzlichen Umgebungsdaten zusammen mit den selbst erfassten Umgebungsdaten an die Speicherplattform übermittelt. Diese zusätzlichen Umgebungsdaten können beispielsweise von dem Anlagenbetreiber manuell eingegeben werden und spezifische Informationen enthalten, welche von den Sensoren des Sensorsystems nicht erfassbar sind. Alternativ werden die Daten von dem Leitsystem der Anlage abgefragt, welches detaillierte Informationen über die Messstelle, in welches das Sensorsystem eingebaut wird, enthält. Die zusätzlichen Umgebungsdaten können daher sowohl Informationen zu dem Sensorsystem, aber auch Informationen bezüglich der Messstelle oder der Komponenten der Messstelle enthalten.

Diese drei Varianten des erfindungsgemäßen Verfahrens schließen sich gegenseitig nicht aus. Es kann vorgesehen sein, die zusätzlichen Umgebungsdaten von mehreren Quellen zu beziehen. Beispielsweise kann eine Kombination des Beziehens von zusätzlichen Umgebungsdaten einer Bedieneinheit mit zusätzlichen Umgebungsdaten von weiteren Sensorsystemen oder von der Leitstelle vorgesehen sein, oder eine Kombination aller drei Varianten.

Gemäß einer bevorzugten Ausgestaltung des erfindungsgemäßen Verfahrens ist vorgesehen, dass für die Verfahrensschritte des Vergleichens der Umgebungsdaten und des Erstellens des Parametersatzes ein Algorithmus auf Basis von künstlicher Intelligenz und/oder neuronalen Netzwerken verwendet wird. Der Vorteil eines solchen Algorithmus ist, dass er selbstlernend ist. Mit fortlaufender Zeit steigt die Güte der vorgeschlagenen Parametersätze. Neue Daten (Umgebungsdaten und erstellte Parametersätze) werden direkt von dem Algorithmus in den Erfahrungsschatz eingearbeitet.

Gemäß einer vorteilhaften Ausgestaltung des erfindungsgemäßen Verfahrens ist vorgesehen, dass als Speicherplattform eine lokal erreichbare Speicherplattform verwendet wird. Diese befindet sich beispielsweise im lokalen Firmennetzwerk des Anlagenbetreibers oder direkt in der Leitstelle der Anlage.

Gemäß einer bevorzugten Ausgestaltung des erfindungsgemäßen Verfahrens ist vorgesehen, dass als Speicherplattform eine mittels des Internets erreichbare, insbesondere cloudfähige, Speicherplattform verwendet wird.

Auf der Speicherplattform befindet sich eine Anwendungsapplikation, welche von der Speicherplattform ausgeführt wird. Diese Speicherplattform übernimmt alle wesentlichen Verfahrensschritte des erfindungsgemäßen Verfahrens, genauer das Verknüpfen und Ablegen der Identifikationsinformationen und der erfassten Umgebungsdaten in der Speicherplattform, das Identifizieren vergleichbarer Sensorsysteme anhand der Identifikationsinformationen, das Vergleichen der Umgebungsdaten des Sensorsystems mit den Umgebungsdaten der vergleichbaren Sensorsysteme und das Erstellen des spezifischen Parametersatzes für das Sensorsystem.

Gemäß einer vorteilhaften Ausgestaltung des erfindungsgemäßen Verfahrens ist vorgesehen, dass der Parametersatz des Sensorsystems editiert werden kann, wobei der editierte Parametersatz an die Speicherplattform übermittelt wird und der bisherige Parametersatz des Sensorsystems mit dem editierten Parametersatz aktualisiert wird. Im Falle, dass der von der Speicherplattform erstellte Parametersatz nicht vollständig zutrifft, oder zu einem späteren Zeitpunkt Änderungen an der Konfiguration oder der Einstellung des Sensorsystems getroffen werden sollen, lässt sich der Parametersatz beliebig manuell ändern, beispielsweise mittels einer am Sensorsystem angeschlossenen Bedieneinheit. Durch das Synchronisieren des aktuellen Parametersatzes des Sensorsystems mit dem auf der Speicherplattform gespeicherten Parametersatz wird die Effizienz des Erstellens der spezifischen Parametersätze erhöht, da eventuelle von der Speicherplattform erstellte Fehler in den Parametersätzen manuell behoben werden. Die Algorithmen der Speicherplattform, bzw. der auf der Speicherplattform ablaufenden Anwendungsapplikation, lernen aus diesen Fehlern, so dass diese nicht erneut in einem erstellten Parametersatz auftreten.

Gemäß einer bevorzugten Ausgestaltung des erfindungsgemäßen Verfahrens ist vorgesehen, dass als Kommunikationssystem ein drahtgebundenes Kommunikationsnetzwerk, insbesondere ein Feldbus der Automatisierungstechnik, oder ein drahtloses Kommunikationsnetzwerk verwendet wird. Bei einem drahtgebundenen Kommunikationssystem handelt es sich insbesondere um einen Ethernet-basiertes Netzwerk. Es kann sich hierbei aber auch um einen Feldbus der Automatisierungstechnik handeln, beispielsweise basierend auf einem der Protokolle HART, Profibus PA/DP, Foundation Fieldbus, etc. Es kann auch vorgesehen sein, dass das Kommunikationssystem aus mehreren Teilsegmenten besteht, welche unter Umständen auf unterschiedlichen Protokollen basieren.

Im Falle, dass das Kommunikationssystem drahtlose ausgestaltet ist, basiert dieses insbesondere auf dem WLAN-, bzw. WiFi-Standard. Alternativ kann jeder weitere gebräuchliche Drahtlosstandard verwendet werden.

Die Erfindung wird anhand der nachfolgenden Figuren näher erläutert. Es zeigen

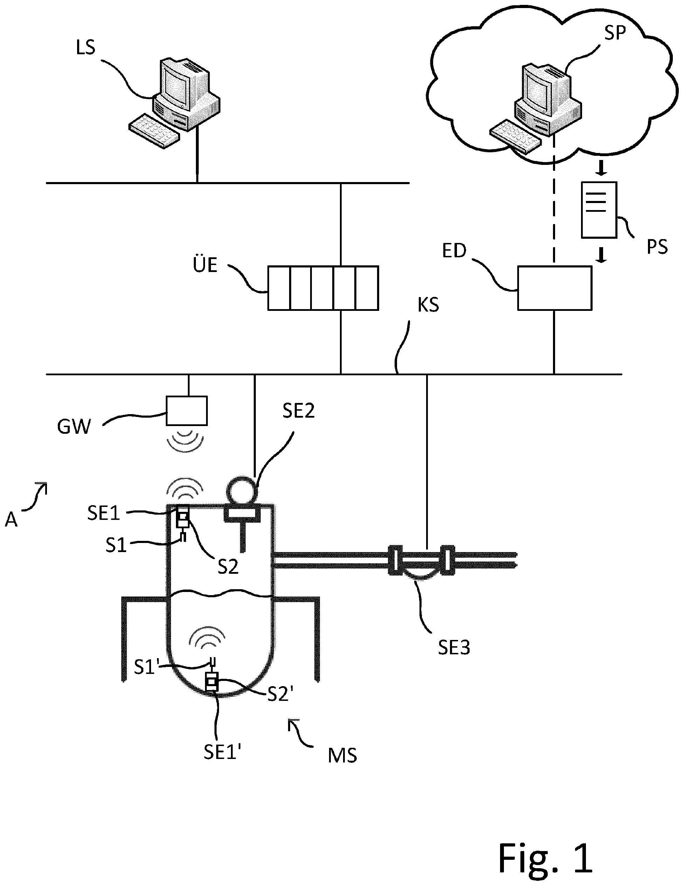

Fig. 1: ein Ausführungsbeispiel des erfindungsgemäßen Verfahrens.

In Fig. 1 ist ein Teil einer Anlage Ader Automatisierungstechnik abgebildet. Konkret handelt es sich um eine Messstelle MS. Diese besteht aus einem Behälter und einer von dem Behälter abführenden Rohrleitung. Zur Messung des Füllstands des Behälters als Prozessgröße ist ein Sensorsystem SE2, beispielsweise ein Füllstandmessgerät mittels eines Radars als Sensor am Behälter. Zur Messung der Durchflussgeschwindigkeit in der Rohrleitung ist jeweils ein Sensorsystem SE3 angebracht, dessen Sensor die Durchflussgeschwindigkeit eines die Rohrleitung durchströmenden Mediums als primäre Prozessgröße nach dem Coriolisprinzip bestimmt. Das Sensorsystem S3 verfügt des Weiteren über einen Temperatursensor, welcher die Temperatur des die Rohrleitung durchströmenden Mediums als sekundäre Prozessgröße erfasst.

Die Sensorsysteme SE2, SE3 sind untereinander mittels eines Kommunikationssystems KS verbunden und stehen miteinander in Kommunikationsverbindung. Bei dem Kommunikationssystem KS handelt es sich insbesondere um ein Ethernet-Netzwerk. Alternativ handelt es sich bei dem Kommunikationssystem KS um einen Feldbus nach einem der bekannten Feldbusstandards, beispielsweise Profibus, Foundation Fieldbus oder HART.

Das Kommunikationsmittel beinhaltet eine übergeordnete Einheit ÜE, beispielsweise eine speicherprogrammierbare Steuerung, welche Befehle an die Sensorsysteme SE2, SE3 übermittelt, woraufhin die Sensorsysteme SE2, SE3 Prozesswerte, Diagnosedaten und Statusinformationen an die übergeordnete Einheit ÜE übermitteln. Diese Prozesswerte, Diagnosedaten und Statusinformationen werden von der übergeordneten Einheit ÜE an einen Workstation-PC in der Leitstelle LS der Anlage A weitergeleitet. Dieser dient unter anderem zur Prozessvisualisierung, Prozessüberwachung und zum Engineering wie zum Bedienen und Überwachen der Sensorsysteme SE2, SE3.

Des Weiteren beinhaltet das erste Kommunikationsnetzwerk KN1 ein Edge Device ED, welches die von den Sensoreinheiten an die übergeordnete Einheit ÜE übermittelten Prozesswerte, Diagnosedaten und Statusinformationen mithört und über das Internet einer auf einer Cloud gelagerten Speicherplattform SP zur Verfügung stellt. Die Serviceplattform ist dazu ausgestaltet, Anwendungsapplikationen auszuführen. Beispielsweise handelt es sich bei einer solchen Anwendungsapplikation um ein Plant Asset Management-System, welches dem Verwalten der Assets, also dem Inventarbestand, der Anlage A dient.

Das Sensorsystem SE1, SE1' soll als Ergänzung in die Messstelle MS eingebaut werden. Bei dem Sensorsystem SE1, SE1' handelt es sich um einen Grenzschalter nach dem vibronischen Prinzip. Das Sensorelement weist als Sensor S1, S1' eine Schwinggabel auf, welche in einer Resonanzfrequenz schwingt. Kontaktiert ein Prozessmedium die Schwinggabel, so ändert sich deren Schwingfrequenz, so dass ein Kontakt mit dem Prozessmedium detektiert wird. Darüber hinaus weist das Sensorsystem SE1, SE1' einen weiteren Sensor S2, S2' auf, welcher als Lagesensor dient und die Höhe und den Neigungswinkel des Sensorsystem SE1, SE1' bestimmen kann.

Im Folgenden wird das erfindungsgemäße Verfahren beschrieben, mittels welchem eine nahezu automatische Inbetriebnahme des Sensorsystems SE1, SE1' erfolgt:
In einem ersten Verfahrensschritt wird das Sensorsystem SE1 am Behälter befestigt. Im vorliegenden Beispiel gibt es zwei alternative Einbauarten: Im ersten Fall wird das Sensorsystem SE1, an den Deckel des Behälters befestigt. Das Sensorsystem SE1 soll in diesem Fall zur Überfüllsicherung des Behälters dienen und einen maximalen Wert eines Füllstands melden. Im zweiten Fall wird das Sensorsystem (zur besseren Unterscheidung hier mit dem Bezugszeichen SE1') versehen, am Boden des Behälters angebracht. In diesem Fall soll das Sensorsystem SE1' zur Leerlaufsicherung dienen und einen minimalen Wert eines Füllstands melden.

In einem zweiten Verfahrensschritt wird das Sensorsystem SE1, SE1` in das Kommunikationssystem KS eingebunden. Hierfür weist das Kommunikationssystem KS ein Gateway GW, welches dazu ausgestaltet ist, Drahtlostelegramme zu empfangen und auszusenden. Darüber hinaus dient das Gateway zum Konvertieren der Drahtlostelegramme in Telegramme des drahtgebundenen Netzwerksegments des Kommunikationssystems KS und vice versa. Alternativ kann es vorgesehen sein, das Sensorsystem SE1, SE1` drahtgebunden mit dem Kommunikationssystem KS zu verbinden.

In einem dritten Verfahrensschritt erfasst das Sensorsystem SE1, SE1' mittels des Lagesensors S2, S2' Daten seiner Umgebung. Im konkreten Fall misst der Lagesensor S2, S2' den Neigungswinkel des Sensorsystems SE1, SE1`. Im ersten Fall befindet sich die Schwinggabel S1 des Sensorsystems SE1 nach unten geneigt. Im zweiten Fall befindet sich die Schwinggabel S1' des Sensorsystems SE1' nach oben geneigt.

Das Sensorsystem SE1, SE1` übermittelt die erhobenen Umgebungsdaten zusammen mit seiner Identifikationsinformation über das Kommunikationssystem KS und über das Edge Device an die Speicherplattform SP. Gleichzeitig werden weitere Umgebungsdaten von der Leitstelle LS an die Speicherplattform übertragen. Die weiteren Umgebungsdaten enthalten Informationen bezüglich der Eigenschaften des Prozessmediums, insbesondere der Dichte, des Behälters.

Auf der Speicherplattform SP sind eine Vielzahl von Identifikationsinformationen und Umgebungsdaten weiterer Sensorsysteme, welche in unterschiedlichen Messstellen angebracht sind, und den weiteren Sensorsystemen zugeordneten Parametersätzen gespeichert. In einem vierten Verfahrensschritt vergleicht eine auf der Speicherplattform SP ablaufende Anwendungsapplikation die Umgebungsdaten (inkl. der weiteren Umgebungsdaten, welche vom Leitsystem stammen) mit den gespeicherten Umgebungsdaten der weiteren Sensorsysteme und erstellt auf Grundlage der mit den gespeicherten Umgebungsdaten verknüpften Parametersätzen einen spezifischen Parametersatz PS für das Sensorsystem SE1, SE1'. Zur Erstellung des spezifischen Parametersatzes PS verwendet die Speicherplattform SP KI-Algorithmen.

In einem fünften, abschließenden Verfahrensschritt übermittelt die Speicherplattform den Parametersatz PS an das Sensorsystem SE1, SE1', welches diesen lädt und anschließend gemäß dem Parametersatz PS eingestellt, bzw. parametriert ist. Im ersten Fall ist das Sensorsystem SE1 derart eingestellt, dass die Schwinggabel S1 im Normalzustand unbedeckt ist und bei Kontakt mit dem Prozessmedium eine entsprechende Meldung an das Leitsystem LS aussendet. Im zweiten Fall ist das Sensorsystem SE1' derart eingestellt, dass die Schwinggabel S1' im Normalzustand bedeckt ist und bei ausbleibendem Kontakt mit dem Prozessmedium eine entsprechende Meldung an das Leitsystem LS aussendet. In beiden Fällen dienen die Informationen bezüglich der Dichte dazu, einen Parameterwert bezüglich der zu erwartenden Frequenz bei Kontakt mit dem Prozessmedium festzulegen.

Sollte der erstellte spezifische Parametersatz PS wider Erwarten fehlerhaft, bzw. unpassend für die Applikation sein, so kann dieser manuell angepasst, bzw. editiert werden. Der editierte Parametersatz wird anschließend an die Speicherplattform SP übermittelt und der bisherige Parametersatz PS des Sensorsystems SE1, SE1` mit dem editierten Parametersatz aktualisiert. Da das Verfahren des Erstellens eines spezifischen Parametersatzes PS aufgrund der Verwendung eines lernfähigen KI-Algorithmus ein lernfähiges Verfahren ist, wird ein solcher Parametersatz PS nicht mehr vorgeschlagen, bzw. erstellt und der Fehler in Zukunft vermieden.

Das erfindungsgemäße Verfahren ist in vielfältigen Anwendungen einsetzbar und nicht auf das in Fig. 1 gezeigte Ausführungsbeispiel beschränkt.

Zusätzlich zu den von dem Sensorsystem SE1, SE1` erhobenen Umgebungsdaten und von dem Leitsystem LS übermittelten weiteren Umgebungsdaten kann das Sensorsystem SE1, SE1` weitere Umgebungsdaten abfragen. Hierfür kontaktiert das Sensorsystem SE1, SE1` die weiteren Sensorsysteme SE2, SE3 der Messstelle MS und fragt deren Umgebungsdaten ab. Alternativ oder ergänzend dazu steht das Sensorsystem SE1, SE1` mit einer Bedieneinheit, welche weitere Sensoren zur Erhebung von Umgebungsdaten aufweist, in Kommunikationsverbindung und fragt deren Umgebungsdaten ab.

Des Weiteren ist das Verfahren nicht auf das Erheben, bzw. Übermitteln der genannten Umgebungsdaten (Neigungswinkel, Dichte des Prozessmediums) beschränkt, sondern erlaubt das Erheben, bzw. das Übertragen einer Vielzahl weiterer Umgebungsdaten. Diese können beispielsweise umfassen:
- Informationen bezüglich der Ortsposition des Sensorsystems SE1, SE1`;
- Informationen bezüglich der Helligkeit der Messstelle MS;
- Informationen bezüglich der Umgebungstemperatur des Sensorsystems SE1, SE1'.

### Bezugszeichenliste

- A: Anlage der Automatisierungstechnik
- ED: Edge Device
- KS: Kommunikationssystem
- LS: Leitstelle der Anlage
- MS: Messstelle
- PS: erstellter Parametersatz
- S1, S1': interner Sensor des Sensorsystems
- S2, S`: weiterer Sensor des Sensorsystems
- SE1, SE1': Sensorsystem
- SP: Speicherplattform
- ÜE: Übergeordnete Einheit

## Patentansprüche

1. Verfahren zum Parametrieren eines Sensorsystems (SE1, SE1'), welches Sensorsystem (SE1, SE1') zumindest einen internen Sensor (S1, S1') zum Erfassen einer physikalischen Messgröße und zumindest einen weiteren Sensor (S2, S2') zum Erfassen von Umgebungsdaten des Sensorsystems (SE1, SE1`) aufweist, umfassend:
- Anbringen des Sensorsystems (SE1, SE1') an einer Messstelle (MS) in einer Anlage (A) der Automatisierungstechnik in vorgesehener Position und Lage;
- Erfassen von Umgebungsdaten des Sensorsystems (SE1, SE1`) mittels des zumindest einen weiteren Sensors (S2, S2');
- Übermitteln von Identifikationsinformationen, welche insbesondere den Typ des Sensorsystems (SE1, SE1') umfassen, und der erfassten Umgebungsdaten an eine Speicherplattform (SP) und Verknüpfen und Ablegen der Identifikationsinformationen und der erfassten Umgebungsdaten in der Speicherplattform (SP), wobei die Speicherplattform (SP) eine Vielzahl von Identifikationsinformationen und Umgebungsdaten weiterer Sensorsysteme, welche in unterschiedlichen Messstellen angebracht sind, und den weiteren Sensorsystemen zugeordneten Parametersätzen vorhält;
- Identifizieren vergleichbarer Sensorsysteme (SE1, SE1') anhand der Identifikationsinformationen und Vergleichen der Umgebungsdaten des Sensorsystems (SE1, SE1') mit den Umgebungsdaten der vergleichbaren Sensorsysteme (SE1, SE1');
- Erstellen eines Parametersatzes (PS) für das Sensorsystem (SE1, SE1') zum Betreiben des internen Sensors (S1, S1') auf Basis des Vergleichs der Umgebungsdaten, wobei der erstellte Parametersatz (PS) dem Sensorsystem (SE1, SE1') und den Umgebungsdaten des Sensorsystems (SE1, SE1') auf der Speicherplattform (SP) zugeordnet wird; und
- Übermitteln des erstellten Parametersatzes (PS) an das Sensorsystem (SE1, SE1') und Laden des erstellten Parametersatzes (PS) in das Sensorsystem (SE1, SE1').

2. Verfahren nach Anspruch 1, wobei mittels des weiteren Sensors (S2, S2') Umgebungsdaten erhoben werden, welche zumindest eine der folgenden Kategorien entsprechen:
- Informationen bezüglich der Ortsposition des Sensorsystems (SE1, SE1');
- Informationen bezüglich der Einbaulage, insbesondere der Einbauhöhe und/oder des Neigungswinkels, des Sensorsystems (SE1, SE1') in der Messstelle (MS);
- Informationen bezüglich der Helligkeit der Messstelle (MS);
- Informationen bezüglich der Umgebungstemperatur des Sensorsystems (SE1, SE1').

3. Verfahren nach Anspruch 1 oder 2, wobei das Sensorsystem (SE1, SE1') vor dem Erfassen der Umgebungsdaten in ein Kommunikationssystem (KS) der Messstelle (MS) eingebunden wird und wobei eine Kommunikation des Sensorsystems (SE1, SE1') mit weiteren Komponenten (SE2, SE3) der Messstelle (MS) über das Kommunikationssystem (KS) ermöglicht wird.

4. Verfahren nach Anspruch 3, wobei das Sensorsystem (SE1, SE1') mit zumindest einem weiteren Sensorsystem (SE2, SE3) der Messstelle (MS) kommuniziert, wobei das Sensorsystem (SE1, SE1') von dem weiteren Sensorsystem (SE2, SE3) zusätzliche Umgebungsdaten abruft, und wobei das Sensorsystem (SE1, SE1') die zusätzlichen Umgebungsdaten zusammen mit den selbst erfassten Umgebungsdaten an die Speicherplattform (SP) übermittelt.

5. Verfahren nach einem der vorherigen Ansprüche, wobei das Sensorsystem (SE1, SE1') mit zumindest einer Bedieneinheit kommuniziert, welche Bedieneinheit zumindest einen Sensor zur Erfassung von Umgebungsdaten aufweist, wobei das Sensorsystem (SE1, SE1') von der Bedieneinheit zusätzliche Umgebungsdaten abruft, und wobei das Sensorsystem (SE1, SE1') die zusätzlichen Umgebungsdaten zusammen mit den selbst erfassten Umgebungsdaten an die Speicherplattform (SP) übermittelt.

6. Verfahren nach Anspruch 5, wobei als Bedieneinheit ein mobiles Endgerät oder eine Datenbrille verwendet wird.

7. Verfahren nach einem der vorherigen Ansprüche, wobei das Sensorsystem (SE1, SE1') mit einer weiteren Speicherplattform (SP) oder der Leitstelle (LS) der Anlage (A) kommuniziert, wobei das Sensorsystem (SE1, SE1') von der weiteren Speicherplattform oder der Leitstelle (LS) der Anlage (A) zusätzliche Umgebungsdaten abruft, und wobei das Sensorsystem (SE1, SE1') die zusätzlichen Umgebungsdaten zusammen mit den selbst erfassten Umgebungsdaten an die Speicherplattform (SP) übermittelt.

8. Verfahren nach einem der vorherigen Ansprüche, wobei für die Verfahrensschritte des Vergleichens der Umgebungsdaten und des Erstellens des Parametersatzes (PS) ein Algorithmus auf Basis von künstlicher Intelligenz und/oder neuronalen Netzwerken verwendet wird.

9. Verfahren nach einem der vorherigen Ansprüche, wobei als Speicherplattform (SP) eine lokal erreichbare Speicherplattform verwendet wird.

10. Verfahren nach einem der vorherigen Ansprüche, wobei als Speicherplattform (SP) eine mittels des Internets erreichbare, insbesondere cloudfähige, Speicherplattform verwendet wird.

11. Verfahren nach einem der vorherigen Ansprüche, wobei der Parametersatz (PS) des Sensorsystems (SE1, SE1') editiert werden kann, wobei der editierte Parametersatz an die Speicherplattform (SP) übermittelt wird und der bisherige Parametersatz (PS) des Sensorsystems (SE1, SE1') mit dem editierten Parametersatz aktualisiert wird.

## Claims

1. Procedure for the parameterization of a sensor system (SE1, SE1'), wherein said sensor system (SE1, SE1') has at least an internal sensor (S1, S1') designed to capture a physical measured variable and at least another sensor (S2, S2') to capture environmental data of the sensor system (SE1, SE1'), wherein said procedure comprises the following steps:
- Placement of the sensor system (SE1, SE1') at a measuring point (MS) in an installation (A) used in automation engineering in a predefined position and place;
- Capturing of the environmental data of the sensor system (SE1, SE1') using the at least one additional sensor (S2, S2');
- Transmission of identification information, which particularly comprise the type of sensor system (SE1, SE1'), and the captured environmental data to a storage platform (SP) and linking and storage of the identification information and the captured environmental data in the storage platform (SP), wherein the storage platform (SP) holds multiple items of identification information and environmental data of other sensor systems, which are installed in different measuring points, and parameter sets assigned to the other sensor systems;
- Identification of comparable sensor systems (SE1, SE1') using identification information and comparison of the environmental data of the sensor system (SE1, SE1') with the environmental data of the comparable sensor systems (SE1, SE1');
- Creation of a parameter set (PS) for the sensor system (SE1, SE1') to operate the internal sensor (S1, S1') on the basis of the comparison of the environmental data, wherein the created parameter set (PS) is assigned to the sensor system (SE1, SE1') and to the environmental data of the sensor system (SE1, SE1') on the storage platform (SP); and
- Transmission of the created parameter set (PS) to the sensor system (SE1, SE1') and loading of the created parameter set (PS) into the sensor system (SE1, SE1').

2. Procedure as claimed in Claim 1, wherein environmental data are collected using the other sensor (S2, S2'), wherein said data correspond to at least one of the following categories:
- Information concerning the spatial position of the sensor system (SE1, SE1');
- Information concerning the installation position, particularly the installation height and/or the angle of inclination, of the sensor system (SE1, SE1') in the measuring point (MS);
- Information concerning the brightness of the measuring point (MS);
- Information concerning the ambient temperature of the sensor system (SE1, SE1').

3. Procedure as claimed in Claim 1 or 2,
wherein the sensor system (SE1, SE1') is integrated in a communication system (KS) of the measuring point (MS) before the environmental data are captured and wherein communication of the sensor system (SE1, SE1') with other components (SE2, SE3) of the measuring point (MS) is enabled via the communication system (KS).

4. Procedure as claimed in Claim 3, wherein the sensor system (SE1, SE1') communicates with at least another sensor system (SE2, SE3) of the measuring point (MS), wherein the sensor system (SE1, SE1') retrieves additional environmental data from the other sensor system (SE2, SE3), and wherein the sensor system (SE1, SE1') transmits the additional environmental data to the storage platform (SP) together with the environmental data it recorded itself.

5. Procedure as claimed in one of the previous claims, wherein the sensor system (SE1, SE1') communicates with at least an operating unit, wherein the operating unit has at least a sensor to capture environmental data, wherein the sensor system (SE1, SE1') retrieves additional environmental data from the operating unit, and wherein the sensor system (SE1, SE1') transmits the additional environmental data to the storage platform (SP) together with the environmental data it recorded itself.

6. Procedure as claimed in Claim 5, wherein a mobile terminal or smart glasses are used as the operating unit.

7. Procedure as claimed in one of the previous claims, wherein the sensor system (SE1, SE1') communicates with another storage platform (SP) or the control station (LS) of the installation (A), wherein the sensor system (SE1, SE1') retrieves additional environmental data from the other storage platform or the control station (LS) of the installation (A), and wherein the sensor system (SE1, SE1') transmits the additional environmental data to the storage platform (SP) together with the environmental data it recorded itself.

8. Procedure as claimed in one of the previous claims, wherein an algorithm based on artificial intelligence and/or neural networks is used for the procedural steps involving the comparison of the environmental data and the creation of the parameter set (PS).

9. Procedure as claimed in one of the previous claims, wherein a locally accessible storage platform is used as the storage platform (SP).

10. Procedure as claimed in one of the previous claims, wherein a storage platform that can be accessed via the Internet, particularly a cloud-enabled storage platform, is used as the storage platform (SP).

11. Procedure as claimed in one of the previous claims, wherein the parameter set (PS) of the sensor system (SE1, SE1') can be edited, wherein the edited parameter set is transmitted to the storage platform (SP) and wherein the previous parameter set (PS) of the sensor system (SE1, SE1') is updated with the edited parameter set

## Revendications

1. Procédé destiné au paramétrage d'un système de capteurs (SE1, SE1'), lequel système de capteurs (SE1, SE1') présente au moins un capteur interne (S1, S1') destiné à l'acquisition d'une grandeur de mesure physique et au moins un autre capteur (S2, S2') destiné à l'acquisition de données environnantes du système de capteurs (SE1, SE1'), lequel procédé comprend les étapes suivantes :
- Mise en place du système de capteurs (SE1, SE1') sur un point de mesure (MS) dans une installation (A) de la technique d'automatisation dans une position et un emplacement prévus ;
- Acquisition de données environnantes du système de capteurs (SE1, SE1') au moyen de l'au moins un autre capteur (S2, S2') ;
- Transmission des informations d'identification, lesquelles comprennent notamment le type du système de capteurs (SE1, SE1'), et des données environnantes acquises à une plateforme de stockage (SP) et mise en relation et stockage des informations d'identification et des données environnantes acquises dans la plateforme de stockage (SP), la plateforme de stockage (SP) conservant une pluralité d'informations d'identification et de données environnantes provenant d'autres systèmes de capteurs, lesquels systèmes sont installés dans différents points de mesure, et des jeux de paramètres associés aux autres systèmes de capteurs ;
- Identification de systèmes de capteurs (SE1, SE1') comparables à l'aide des informations d'identification et comparaison des données environnantes du système de capteurs (SE1, SE1') avec les données environnantes des systèmes de capteurs comparables (SE1, SE1') ;
- Création d'un jeu de paramètres (PS) pour le système de capteurs (SE1, SE1') pour faire fonctionner le capteur interne (S1, S1') sur la base de la comparaison des données environnantes, le jeu de paramètres (PS) créé étant associé au système de capteurs (SE1, SE1') et aux données environnantes du système de capteurs (SE1, SE1') sur la plateforme de stockage (SP) ; et
- Transmission du jeu de paramètres (PS) créé au système de capteurs (SE1, SE1') et chargement du jeu de paramètres (PS) créé dans le système de capteurs (SE1, SE1').

2. Procédé selon la revendication 1, pour lequel des données environnantes sont collectées au moyen de l'autre capteur (S2, S2'), lesquelles données correspondent à au moins une des catégories suivantes :
- Informations concernant la position du système de capteurs (SE1, SE1');
- Informations concernant la position de montage, notamment la hauteur de montage et/ou l'angle d'inclinaison, du système de capteurs (SE1, SE1') dans le point de mesure (MS) ;
- Informations concernant la luminosité du point de mesure (MS) ;
- Informations concernant la température ambiante du système de capteurs (SE1, SE1').

3. Procédé selon la revendication 1 ou 2,
pour lequel le système de capteurs (SE1, SE1') est intégré dans un système de communication (KS) du point de mesure (MS) avant l'acquisition des données environnantes et
pour lequel une communication du système de capteurs (SE1, SE1') avec d'autres composants (SE2, SE3) du point de mesure (MS) est rendue possible par le système de communication (KS).

4. Procédé selon la revendication 3, pour lequel le système de capteurs (SE1, SE1') communique avec au moins un autre système de capteurs (SE2, SE3) du point de mesure (MS), le système de capteurs (SE1, SE1') récupérant des données environnantes supplémentaires auprès de l'autre système de capteurs (SE2, SE3), et le système de capteurs (SE1, SE1') transmettant les données environnantes supplémentaires à la plateforme de stockage (SP) en même temps que les données environnantes qu'il a lui-même acquises.

5. Procédé selon l'une des revendications précédentes, pour lequel le système de capteurs (SE1, SE1') communique avec au moins une unité de commande, laquelle unité de commande présente au moins un capteur pour l'acquisition de données environnantes, le système de capteurs (SE1, SE1') récupérant des données environnantes supplémentaires auprès de l'unité de commande, et le système de capteurs (SE1, SE1') transmettant à la plateforme de stockage (SP) les données environnantes supplémentaires avec les données environnantes qu'il a lui-même acquises.

6. Procédé selon la revendication 5, pour lequel un terminal mobile ou des lunettes de données sont utilisés comme unité de commande.

7. Procédé selon l'une des revendications précédentes, pour lequel le système de capteurs (SE1, SE1') communique avec une autre plateforme de stockage (SP) ou le poste de commande (LS) de l'installation (A), le système de capteurs (SE1, SE1') récupérant des données environnantes supplémentaires auprès de l'autre plateforme de stockage ou du poste de contrôle-commande (LS) de l'installation (A), et le système de capteurs (SE1, SE1') transmettant les données environnantes supplémentaires à la plateforme de stockage (SP) en même temps que les données environnantes qu'il a lui-même acquises.

8. Procédé selon l'une des revendications précédentes, pour lequel un algorithme basé sur l'intelligence artificielle et/ou des réseaux neuronaux est utilisé pour les étapes de procédé consistant à comparer les données environnantes et à créer le jeu de paramètres (PS).

9. Procédé selon l'une des revendications précédentes, pour lequel on utilise comme plateforme de stockage (SP) une plateforme de stockage accessible localement.

10. Procédé selon l'une des revendications précédentes, pour lequel on utilise comme plateforme de stockage (SP) une plateforme de stockage accessible au moyen d'Internet, notamment une plateforme de stockage dans le cloud.

11. Procédé selon l'une des revendications précédentes, pour lequel le jeu de paramètres (PS) du système de capteurs (SE1, SE1') peut être édité, le jeu de paramètres édité étant transmis à la plateforme de stockage (SP) et le jeu de paramètres (PS) précédent du système de capteurs (SE1, SE1') étant mis à jour avec le jeu de paramètres édité.
